**Europäisches Patentamt**

**European Patent Office**

**Office européen des brevets**

(19)

(11) Veröffentlichungsnummer : **0 435 848 B1**

(12)

# EUROPÄISCHE PATENTSCHRIFT

(45) Veröffentlichungstag der Patentschrift :
**10.08.94 Patentblatt 94/32**

(51) Int. Cl.$^5$ : **B01D 53/34**

(21) Anmeldenummer : **90890340.4**

(22) Anmeldetag : **19.12.90**

(54) **Verfahren zur Behinderung der Dioxin- und Furanbildung.**

(30) Priorität : **27.12.89 AT 2941/89**

(43) Veröffentlichungstag der Anmeldung :
**03.07.91 Patentblatt 91/27**

(45) Bekanntmachung des Hinweises auf die
Patenterteilung :
**10.08.94 Patentblatt 94/32**

(84) Benannte Vertragsstaaten :
**CH DE LI NL SE**

(56) Entgegenhaltungen :
**EP-A- 0 223 270**
**EP-A- 0 301 272**
**DE-A- 2 531 933**
**DE-A- 3 527 615**
**DE-A- 3 623 015**
**GB-A- 1 325 460**
**US-A- 4 681 045**
**US-A- 4 753 181**
**US-A- 4 793 270**

(73) Patentinhaber : **WAAGNER-BIRO**
**AKTIENGESELLSCHAFT**
**Stadlauer Strasse 54**
**Postfach 11**
**A-1221 Wien (AT)**

(72) Erfinder : **Bobik, Michael, Dr.**
**St. Peter-Hauptstrasse 35E/14**
**A-8042 Graz (AT)**
Erfinder : **Lindbauer, Ralf, Dr.**
**Stattegerstrasse 81e**
**A-8045 Graz (AT)**

(74) Vertreter : **Wallner, Gerhard, Dipl.-Ing.**
**c/o Waagner-Biro Aktiengesellschaft**
**Patentabteilung**
**Stadlauer-Strasse 54**
**Postfach 11**
**A-1221 Wien (AT)**

## Beschreibung

Die Erfindung betrifft ein Verfahren zur Behinderung der Dioxin- und Furanbildung aus chemischen Bausteinen bei der Verbrennung von inhomogenen Brennstoffen mit rauchgasseitig der Brennkammer nachgeschalteter Rauchgaskühlung und -reinigung, wobei zusätzlich zum Schwefelgehalt des Brennstoffes das Schwefelangebot vergrößert wird, indem in der Brennkammer $SO_2$ frei oder zugesetzt wird und so im Abgas das Gewichtsverhältnis Schwefel zu Chlor in Richtung zu mehr Schwefel verschoben wird.

Bei der Schadstoffbekämpfung im Abgas hat man von verschiedenen Gruppen auszugehen. Die Schwefel- und Chlorverunreinigungen treten aufgrund des elementaren Auftretens von Schwefel und Chlor im Brennstoff auch im Abgas auf, sodaß eine Abscheidung anwesenheitsbedingt ist. Nox ist eine chemische Verbindung, die sowohl abgebaut als auch abgebunden werden kann, sodaß auch hier ein eigener Abscheidungsmechanismus, siehe z. B. DE-A-35 27 615 oder EP-A-301 272, gegeben ist, der mit der Dioxin- und Furanbildung in speziellen Feuerungen nicht vergleichbar ist. Dioxine und Furane sind chemische Schadstoffe, die sich aus gasförmigen Verbrennungsrückständen bilden, wobei dei Anwesenheit von organischen Verbindungen und des Elementes Chlor wesentlich sind. Zur Dioxinabscheidung werden besondere Filter nachgeschaltet, wobei allerdings die Verfügbarkeit der Anlage durch die zusätzliche Einheit verringert wird. Aber auch die Dioxin- und Furansammlung im Filter verursacht Bedenken. Bei der Verwendung von brennbaren Aktivkohlefiltern sollte man bedenken, daß durch die Verbrennung der Aktivkohle die Dioxinmenge nur reduziert wird, sodaß es besser ist, die Dioxin- und Furanbildung schon bei der Verbrennung bzw. in den nachgeschalteten Anlagen zu behindern.

Aus der US-A-4 793 270 ist ein derartiges Verfahren bekannt, bei der zur Unterdrückung der Dioxinbildung an der als Katalysator wirkenden Flugasche Schwefelverbindungen als Katalysatorgifte dem Abgas nach der Brennkammer, insbesondere im Staubfilter, zugemischt werden.

Die DE-OS 35 27 615 offenbart ein Verfahren zur Bekämpfung der Dioxinbildung, bei dem die heißen chlorhältigen Abgase bei über 300° C mit einem chlorbindenden Pulver behandelt werden und dieses beladene Pulver abgeschieden wird.

Die Erfindung hat es sich zur Aufgabe gestellt, der Dioxin- und Furanbildung schon in der Brennkammer durch geeignete Maßnahmen entgegen zu wirken.

Die Erfindung ist dadurch gekennzeichnet, daß in die Brennkammer zusätzlich alkalische, chlorbindende Brennkammeradditive zugegeben werden und daß in dem die Brennkammer verlassenden Abgas das Gewichtsverhältnis Schwefel zu Chlor mindestens 0,8 beträgt, sodaß im Abgas bei Temperaturen zwischen 100° und 500° C die für die Schadstoffbildung notwendigen Bausteine und/oder Katalysatoren nicht in genügender Anzahl vorhanden sind.

Wesentliche Ausgestaltungen der Erfindung sind in den Unteransprüchen 2 bis 14 angegeben.

Die Erfindung wird anhand einer Müllverbrennung beispielsweise erklärt. Bei der Müllverbrennung werden inhomogene Brennstoffe, wie sie im Haushalt oder Gewerbe anfallen, in einer Brennkammer mit Wärmerückgewinnung verbrannt. Die Wärmerückgewinnung erfolgt durch Rauchgasabkühlung, wobei natürlich eine gewisse Verweilzeit des Abgases in den abgestuften Temperaturbereichen gegeben ist, so daß sich insbesondere im Temperaturbereich von 300° bis 100° C, in dem beispielsweise die Rauchgasreinigungsanlagen liegen, Dioxine und Furane aus Bausteinen zusammensetzen können, so daß die abgeschiedenen Stäube und die nicht abgeschiedenen Reststäube ein gewisses Gefahrenrisiko darstellen. Es sind daher zusätzliche Rauchgasreinigungsvorschriften mit unterschiedlichen Toleranzen für chlorierte und gemischthalogenierte (bromierte) Dioxine und Furane vorgegeben, wobei man davon ausgehen kann, daß es zumindest 135 verschiedene chlorierte Dioxine und 75 verschiedene chlorierte Furane gibt, deren Anwesenheit im Abgas gemessen werden kann und die dann entsprechend ihrer Giftigkeit bzw. ihrer unterschiedlichen Gewichtung zu einem theoretischen Dioxin-Gehalt führen, der in Österreich derzeit bei 0,1 ng/$m_3$ Toxizitätsäquivalente im Rauchgas vorgegeben ist. Bei dieser Vorgabe ist es jedermann klar, daß Triviallösungen, keine Chlorverbindungen zu verbrennen bzw. keine Phenole der Verbrennung zuzuführen, von vornherein ausfallen. Versuche zeigten allerdings, daß das Schwefel/Chlor-Verhältnis in der Brennkammer ein wesentliches Merkmal darstellt, so daß durch höhere Schwefelgehalte des Abgases die Bildung von Dioxinen und Furanen behindert werden kann, wobei besonders das übliche Schwefel/Chlor-Schadgasverhältnis von kleiner als 0,5 auf 0,8 bzw. 1,5 bzw. noch mehr Schwefel zur Behinderung der Dioxin-Schadstoffbildung erhöht wird, so daß es zur Minderung der Schadstoffbildung beiträgt. Dieses Verhältnis kann erreicht werden, indem in der Brennkammer als Stützfeuerung schwefelhältige Kohlen oder schwefelhältiges Öl, gegebenenfalls auch Altöle, verbrannt werden. Ja es zeigte sich, daß es sogar günstig ist, wenn die Abfallprodukte einer Schadgassorptionsanlage, wo hauptsächlich Ammonium-, Alkali-, Erdalkali- -sulfite und -sulfate und/oder diesbezügliche Hydrogensulfite bzw. Hydrogensulfate eingebracht werden können, wobei das miteingebrachte Dioxin praktisch bedeutungslos ist, da dieses verbrannt wird und die mögliche Dioxinbildung in einer Feuerung vorgegeben ist, so daß zusätzlich eingebrachtes Dioxin in seine Bestandteile zerfällt. Es können aber auch schwefelhältige Abgase mit den dioxinverdächtigen Abgasen gemischt werden, so daß auch hier der relative Schwefelgehalt ansteigt, gegebenenfalls können auch Altreifen oder Sulfit- oder Sulfatablaugen verbrannt werden. Als weiterer Schwefelträger bei der Verbrennung wird industrieller und kommunaler Klärschlamm verwendet, dessen Deponierung problematisch ist. Da die Chloride in der Brennkammer leichter absorbiert werden als Schwefeloxide, ist es auch vorteilhaft, alkalische Brennkammeradditive wie z.B. $Ca(OH)_2$, $CaCO_3$, $MgCO_3$ oder $NaHCO_3$ in die Brennkammer einzublasen. Eine zusätzliche Möglichkeit zur Reduzierung des Dioxingehaltes besteht darin, daß die Abgase von einem Temperaturbereich von 700° auf 300° rasch auf Temperaturen von 200° bis 100° C abgekühlt werden. Hiezu bieten sich kalte Heizflächen bzw. direkte Wassereinsprühung an. Es ist bekannt, daß die Dioxine und Furane nicht direkt bei der Verbrennung entstehen, hiebei entstehen nur gewisse Bauteile, die sich im Temperaturbereich von unter 500° C bis auf etwa 100°C zur Dioxin- und/oder Furan-Schadstoffbildung vereinen. Wird nun die Abkühlphase erfindungsgemäß rasch durchfahren, so kommt es zu keiner bzw. zu einer verminderten Schadstoffbildung. Diese rasche Abkühlung kann erreicht werden, indem in dem Temperaturbereich von unter 500° C Wasser eingespritzt wird, welches zur Gänze verdampft bzw. indem das Abgas bei 500° C durch einen Wäscher hindurchgeführt und gleichzeitig entstaubt wird. Eine weitere Möglichkeit, eine chemische Reaktion durchzuführen, bei der Wärme im Abgas gebunden wird. Gegebenenfalls läßt sich auch durch die Anordnung von mit Wasser durchströmten Heizflächen das Abgas so rasch abkühlen, so daß die geforderte maximale Dioxinmenge eingehalten bzw. unterfahren werden kann. Wesentlich ist, daß eine etwaige trockene Entstaubung der Abgase erst unterhalb von 100° C erfolgt, wo keine Dioxinbildung mehr zu erwarten ist. Gegebenenfalls kann die trockene Entstaubung auch über 500° C erfolgen, wobei besonders die Schwermetalle aus dem Abgas entfernt werden, die insbesondere durch ihren Kupfergehalt katalytisch wirken, wobei die Dioxinbildung vom Kupferoxidgehalt bzw. Kupferchloridgehalt gesteuert wird. Bei der Verwendung von chemischen Reaktionen zur raschen Abkühlung des Staubgases hat sich ein Fließbett oder Feststoffreaktor bewährt, in dem das Abgas durch fluidisiertes $Ca(OH)_2$ bzw. $NaHCO_3$ geführt wird, wobei entsprechend dem Abgasgehalt an $SO_2$ bzw. $SO_3$ und Chlor der Feststoff in Natriumchlorid und/oder $Na_2SO_3$ abgebaut wird. Die gebildeten Salze werden aus dem Fließbett kontinuierlich abgezogen und durch frisches Speisesoda bzw. Kalkhydrat ersetzt. Wie Versuche zeigten, kann auch durch verstärkte $NO_x$-Bildung in der Brennkammer die Dioxinbildung behindert werden, indem sich das aktivierte $NO_x$ an die Dioxinbauteile anlagert und so eine direkte Dioxinbildung im Temperaturbereich zwischen 500° und 100° C behindert. Besonders gute Ergebnisse wurden erreicht, wenn $NO_x$-reiche Abgase in einem Fließbettreaktor mit Speisesoda in Kontakt gebracht werden, so daß das abströmende Abgas unter 0,1 ng/m$_3$ Dioxin-Toxizitätsäquivalente aufweist und auch das $NO_x$ im Abgas auf tolerierbare Werte abgesunken ist. Diese Reduzierung, die katalytisch unterstützt wird, kann durch Katalysatormangel noch weiter gebremst werden, indem verhindert wird, daß Kupferoxid bzw. kupferchloridhaltige Stäube in den Temperaturbereich von 300° bis 100° gelangen. Dies ließe sich beispielsweise durch ein Feststofffilter im Bereich von unter 400° C Abgastemperatur erreichen, wobei als Feststoff ein Natriumhydrogenkarbonat verwendet wird, welches bei dieser Temperatur aktiviert wird, wobei Schadstoffe, soweit vorhanden, an das Natrium gebunden werden. In diesem Fall würden die chlorhaltigen Bestandteile des Dioxins durch Radikale, insbesondere Hydroxylradikale, unter Bildung von Natriumchlorid zersetzt, so daß der Aufbau der gefährlichen Dioxine behindert wird. Diese Bildung der Hydroxylradikale kann beispielsweise durch Beigabe von Hydroxylen und/oder die Zugabe von Speisesoda oder Kalziumhydroxyd oder die Zugabe von $NO_x$ gefördert werden.

Wie in den Beispielen dargestellt, läßt sich somit durch Eingriffe in der Brennkammer und gegebenenfalls zusätzlichen Eingriffen im Temperaturbereich von 100° und 500° C die Bildung von Dioxinen und Furanen behindern, so daß die gesetzlichen Werte ohne Einschaltung von zusätzlichen Aktiv-Kohlenfiltern eingehalten werden können.

Wenn durch die obengenannten Verfahrensschritte, insbesondere der Waschstufen, der Taupunkt der Rauchgase erreicht wird oder in wirtschaftlich erreichbare Bereiche kommt, kann es zweckvoll sein, die Endreinigung bei weiterer Rauchgaskühlung in einem Kondensationselektrofilter durchzuführen, so daß durch Tröpfchenbildung an Keimen und Kondensatbildung eine besonders gute Abscheidung von Restschadstoffen und Aerosolen gegeben ist. Anschließend sollte aber das Rauchgas durch Regeneratorschaltungen wieder erwärmt und damit getrocknet werden.

Die Erfindung wird an Hand von in einer Tabelle zusammengefaßten Meßergebnissen aus einer Versuchsreihe mit Hausmüll und Zuschlagstoffen ergänzt. Es ist aus diesen Meßergebnissen ersichtlich, daß mit steigendem S-Gehalt im Brennstoff bei im wesentlichen konstantem Chlorgehalt, also mit steigendem S- zu Cl-Molverhältnis, die Dioxinbildung um eine Zehnerpotenz abnimmt. Insbesondere scheint die Brennstoffkombination "Hausmüll mit 25 % schwefelhältiger Kohle" ein wirtschaftlich gesehen optimaler Brennstoff zu sein, der durch seinen Kohlengehalt selbst brennend ist und daher keine Zusatzfeuerung benötigt. Diese Dioxin-Werte können durch der Brennkammer nachgeschaltete Maßnahmen noch weiter gesenkt werden, wie sie insbesondere in den Ansprüchen 9 bis 14 gekennzeichnet sind, wobei durch die Maßnahmen der Ansprüche 9, 10, 12 und 14 gleichzeitig die $SO_2$- und Cl-Gehalte entsprechend herabgesetzt werden.

VERGLEICH ROHGASWERTE $SO_2$, HCl, S/Cl mit Dioxinkonzentration (als ng PCDD/F TE/Nm$^3$)

| Brennstoff | $SO_2$ ng/Nm$^3$ | HCl ng/Nm$^3$ | S/Cl | TE ng/Nm$^3$ |
|---|---|---|---|---|
| Hausmüll | 90 | 1130 | 0,04 | 7,1 |
| (verschiedene | 140 | 1020 | 0,07 | 5,9 |
| Anlagen) | 250 | 1320 | 0,09 | 2,4 |
| | 320 | 1400 | 0,11 | 3,8 |
| Hausmüll mit 25 % schwefelhaltiger Kohle | 1650 | 1350 | 0,61 | 0,27 |
| Hausmüll mit 48 % schwefelhaltiger Kohle | 2580 | 1180 | 1,09 | 0,14 |
| Hausmüll mit 0,5 % Schwefelblume | 2030 | 1580 | 0,64 | 1,5 |
| Hausmüll mit 0,9 % Schwefelblume | 2860 | 1470 | 0,97 | 0,6 |
| Hausmüll mit 20 % Klärschlamm | 440 | 800 | 0,28 | 0,75 |
| Hausmüll mit 35 % Klärschlamm | 480 | 1030 | 0,23 | 0,92 |

## Patentansprüche

1. Verfahren zur Behinderung der Dioxin- und Furanbildung aus chemischen Bausteinen bei der Verbrennung von inhomogenen Brennstoffen mit rauchgasseitig der Brennkammer nachgeschalteter Rauchgaskühlung und -reinigung, wobei zusätzlich zum Schwefelgehalt des Brennstoffes das Schwefelangebot vergrößert wird, indem in der Brennkammer $SO_2$ frei- oder zugesetzt wird,und so im Abgas das Gewichtsverhältnis Schwefel zu Chlor in Richtung zu mehr Schwefel verschoben wird, dadurch gekennzeichnet, daß in die Brennkammer zusätzlich alkalische, chlorbindende Brennkammeradditive zugegeben werden und daß in dem die Brennkammer verlassenden Abgas das Gewichtsverhältnis Schwefel zu Chlor mindestens 0,8 beträgt, sodaß im Abgas bei Temperaturen zwischen 100° und 500° C die für die Schadstoffbildung notwendigen Bausteine und/oder Katalysatoren nicht in genügender Anzahl vorhanden sind.

2. Verfahren nach Anspruch 1, dadurch gekennzeichnet, daß in der Brennkammer schwefelhaltige Brennstoffe, wie z. B. Altöle, als Stützfeuerung verbrannt werden.

3. Verfahren nach Anspruch 1, dadurch gekennzeichnet, daß in die Brennkammer schwefelhaltige Produkte aus der Schadgasabsorptionsanlage eingebracht werden.

4. Verfahren nach Anspruch 1, dadurch gekennzeichnet, daß in der Brennkammer ein Gemisch aus Sulfit- bzw. Sulfatablauge mit dem Brennstoff verbrannt wird.

5. Verfahren nach Anspruch 1, dadurch gekennzeichnet, daß in der Brennkammer industrieller bzw. kommunaler Klärschlamm in Mischung mit dem inhomogenen Brennstoff verbrannt wird.

6. Verfahren nach Anspruch 1, dadurch gekennzeichnet, daß in der Brennkammer Hydrogensulfite bzw. Hydrogensulfate aus einer Rauchgassorptionsanlage zur Erhöhung des Schwefelanteiles im Abgas eingebracht werden.

7. Verfahren nach Anspruch 1, dadurch gekennzeichnet, daß das die Brennkammer verlassende Abgas zusätzlich im Temperaturbereich von 700° bis 300° C durch Wassereinspritzung rasch in einem Quencher oder Naßwäscher auf Temperaturen von 200° bis 100° C abgekühlt wird.

8. Verfahren nach Anspruch 1, dadurch gekennzeichnet, daß das die Brennkammer verlassende Abgas zusätzlich vor einem Feststoffilter im Bereich von unter 400° C mit körnigem, verwirbeltem $NaHCO_3$ unter chemischer Umsetzung des benötigten Feststoffes in Kontakt gebracht wird.

9. Verfahren nach Anspruch 8, dadurch gekennzeichnet, daß die Verbrennung des Brennstoffes in der Brennkammer unter Bildung von gegenüber den üblichen Werten einer Müllverbrennung NOx-reicheren Abgasen durch Erhöhung der Verbrennungstemperatur erfolgt und das NOx in einem Fließbettreaktor mit $NaHCO_3$ die Bildung der Bauteile des Dioxins hindert, wobei Zwischenprodukte, wie Radikale, entstehen, die die Bausteine des Dioxins bzw. des Furans an der Bildung des Dioxins bzw. des Furans behindern.

10. Verfahren nach Anspruch 1, dadurch gekennzeichnet, daß metallhaltige Bestandteile des inhomogenen Brennstoffes vor der Verbrennung zumindest teilweise abgeschieden werden.

11. Verfahren nach Anspruch 1, dadurch gekennzeichnet, daß die Abgase entweder durch chemische endotherme Reaktionen oder durch physikalische Wärmeabgabe an von Wasser durchströmten Kühlflächen im Temperaturbereich von 500° bis 300° C auf etwa 100° C rasch abgekühlt und mit dieser Temperatur trocken in einem Tuchfilter entstaubt werden.

12. Verfahren nach Anspruch 1, dadurch gekennzeichnet, daß die Abgase entweder durch chemische endotherme Reaktionen oder durch physikalische Wärmeabgabe an von Wasser durchströmten Kühlflächen im Temperaturbereich von 500° bis 300° C auf 100° C rasch abgekühlt und mit dieser Temperatur naß in einem Elektrofilter unter Kondensatbildung entstaubt werden.

13. Verfahren nach Anspruch 1 oder 7, dadurch gekennzeichnet, daß die Abgase im Temperaturintervall von 500° C bis 300° C von Schwermetallstäuben befreit werden.

14. Verfahren nach Anspruch 1 oder 9, dadurch gekennzeichnet, daß die Abgase durch einen Feststoffreaktor mit fluidisierten alkalischen Sorbentien geführt werden, wobei Radikale, insbesondere OH-Radikale, abgespalten werden, die mit den oxidierbaren Dioxinen bzw. deren Bausteinen reagieren.

**Revendications**

1. Méthode d'empêcher la formation des dioxines et furanes à partir de composés chimiques lors de l'incinération de combustibles inhomogènes à l'aide du refroidissement et de l'épuration suivants des fumées au côté des fumées de la chambre de combustion où supplémentairement à la teneur en soufre du combustible l'alimentation en soufre est augmentée en relâchant l'anhydride sulfureux dans la chambre de combustion ou en l'injectant conduisant à un décalage des relations de poids des fumées entre le chlore et le soufre vers une importance accrue du soufre et caractérisé par le fait que des additifs alcalin et absorbant du chlore sont introduits dans la chambre de combustion résultant dans la relation des poids entre le soufre et le chlore des fumées à la sortie de la chambre de combustion est au moins égale à 0,8 ce qui conduit à un nombre insuffisant des composés et/ou catalyseurs nécessaires pour la formation des substances nocives des fumées aux températures de 100 et 500°C.

2.  Méthode selon la revendication no 1 caractérisée par le fait que des combustibles sulfureux tels que des huiles usées sont incinérés dans la chambre de combustion pour fins de combustion supplémentaire.

3.  Méthode selon la revendication no 1 caractérisée par le fait que des produits sulfureux provenant de l'unité à absorption des gaz nocifs sont introduits dans la chambre de combustion.

4.  Méthode selon la revendication no 1 caractérisée par le fait qu'un mélange de liqueurs de sulfite et/ou de sulfate usées est incinéré communément avec le combustible primaire.

5.  Méthode selon la revendication no 1 caractérisée par le fait que les boues industrielles et/ou municipales sont incinérées communément sous forme d'un mélange avec le combustible inhomogène.

6.  Méthode selon la revendication no 1 caractérisée par le fait que les sulfites d'hydrogène et/ou les sulfates d'hydrogène provenant d'une unité à absorption des fumées afin d'augmenter la teneur en soufre des fumées.

7.  Méthode selon la revendication no 1 caractérisée par le fait que les fumées sortant de la chambre de combustion sont refroidies rapidement aux températures de 200 à 100°C dans un laveur humide partant des températures de 700 à 300°C.

8.  Méthode selon la revendication no 1 caractérisée par le fait que les fumées sortant de la chambre de combustion sont supplémentairement mises en contact avec NaHCO3 granuleux et turbulent devant un filtre à substances solides aux températures de moins de 400°C auxquelles les substances solides sont transformées chimiquement.

9.  Méthode selon la revendication no 8 caractérisée par le fait que l'incinération du combustible se fait par l'augmentation de la température de l'incinération et la formation de fumées aux teneurs en NOx plus élevées comparées aux valeurs habituelles d'une installation à incinération de déchets et cet NOx est incinéré dans un réacteur à lit fluidisé contenant NaHCO3 et pendant ce procédé NOx empêche la formation des composés du dioxine où des produits intermédiaires tels que des radicaux sont formés qui empêchent les composés du dioxine et/ou du furane à la formation du dioxine et/ou du furane.

10.  Méthode selon la revendication no 1 caractérisée par le fait que des composés métalliques du combustible inhomogène sont séparés avant la combustion au moins partiellement.

11.  Méthode selon la revendication no 1 caractérisée par le fait que les fumées sont refroidies rapidement d'une température de 500 à 300°C à environ 100°C à l'aide de réactions chimiques endothermiques ou du dégagement de chaleur physique aux surfaces de refroidissement remplies d'eau et à cette dernière température, elles sont dépoussiérées sèchement dans un filtre en tissu.

12.  Méthode selon la revendication no 1 caractérisée par le fait que les fumées sont refroidies rapidement d'une température de 500 à 300°C à environ 100°C à l'aide de réactions chimiques endothermiques ou du dégagement de chaleur physique aux surfaces de refroidissement remplies d'eau et à cette dernière température, elles sont dépoussiérées humidement dans un filtre électrostatique produisant également des condensâts.

13.  Méthode selon la revendication no 1 ou 7 caractérisée par le fait que les fumées sont séparées des poussières de métaux lourds dans une plage de température de 500 à 300°C.

14.  Méthode selon la revendication no 1 ou 9 caractérisée par le fait que les fumées sont introduites dans un réacteur à substances solides contenant des agents à absorption alcalins fluidisés où des radicaux et particulièrement les radicaux OH sont séparés et réagissent avec les dioxines oxydables et/ou ses composés.

## Claims

1.  Method of hindering the production of dioxins and furans from chemical compounds in the combustion of inhomogeneous combustibles with flue gas cooling and cleaning downstream the flue gas side of the combustion chamber where the supply of sulphur is increased in addition to the content of sulphur in the combustible by releasing into or adding sulphur dioxide to the combustion chamber, which will shift the weight ratio between sulphur and chlorine in the waste gas to the sulphur side and also characterized by the supplementary input of alkaline and chlorine retaining combustion chamber additives and by the weight ratio between sulphur and chlorine in the waste gas leaving the combustion chamber which is at least 0.8 so that the components and/or catalysts required for the formation of harmful substances at temperatures between 100 and 500°C are not available in sufficient number.

2. Method as described in claim 1 characterized by the supplementary firing of sulphurous combustibles like waste oils in the combustion chamber.

3. Method as described in claim 1 characterized by the input of sulphurous products from the absorption plant for harmful gases.

4. Method as described in claim 1 characterized by the combustion of a mixture of sulphite and sulphate waste liquor together with the combustible in the combustion chamber.

5. Method as described in claim 1 characterized by the combined combustion of industrial and/or municipal sewage sludge with the inhomogeneous combustible.

6. Method as described in claim 1 characterized by the input of hydrogen sulphites and/or hydrogen sulphates from a flue gas absorption plant in order to increase the content of sulphur in the waste gas.

7. Method as described in claim 1 characterized by the additional and quick cooling of the waste gas leaving the combustion chamber at a temperature range of 700° to 300°C by the injection of water into a quencher or wet-type scrubber down to temperatures of 200° to 100°C.

8. Method as described in claim 1 characterized by the additional bringing into contact of the waste gas leaving the combustion chamber with grainy and turbulent $NaHCO_3$ during the chemical conversion of the required solid substance upstream a solid substance filter in the temperature range of less than 400°C.

9. Method as described in claim 8 characterized by the combustion of the combustible in the combustion chamber where the formation of the exhaust gases which have higher NOx contents than usual in waste incineration plants due to the increase in the combustion temperature and where NOx hinders the formation of the components of dioxin in a fluidized bed reactor using $NaHCO_3$ and during which intermediate products like radicals are formed that hinder the components of the dioxin and/or the furan in the formation of the dioxin and/or furan.

10. Method as described in claim 1 characterized by the fact that metallic components of the inhomogeneous combustible are separated before the combustion at least partially.

11. Method as described in claim 1 characterized by the fact that the exhaust gases are quickly cooled down to approximately 100°C from a temperature range of 500 to 300°C by means of chemical endothermic reactions or by the physical heat release at cooling surfaces swept by water and at which temperature they are subject to dry dedusting within a cloth filter.

12. Method as described in claim 1 characterized by the fact that the exhaust gases are quickly cooled down to approximately 100°C from a temperature range of 500 to 300°C by means of chemical endothermic reactions or by the physical heat release at cooling surfaces swept by water and at which temperature they are subject to wet-type dedusting within an electrostatic precipitator and condensates are formed as well.

13. Method as described in claim 1 or 7 characterized by the fact that the exhaust gases have the heavy metal dusts removed in a temperature interval of 500 to 300°C.

14. Method as described in claim 1 or 9 characterized by the fact that the exhaust gases are led through a solid substance reactor containing fluidized alkaline sorbents where radicals, especially OH radicals, are split off and which react with the oxydizable dioxins and/or their components.